Europäisches Patentamt

European Patent Office

Office européen des brevets

(11) Numéro de publication : **0 331 532 B1**

# (12) FASCICULE DE BREVET EUROPEEN

(45) Date de publication du fascicule du brevet :
**02.01.92 Bulletin 92/01**

(51) Int. Cl.⁵ : **F16D 65/09**

(21) Numéro de dépôt : **89400057.9**

(22) Date de dépôt : **10.01.89**

(54) Frein à tambour notamment pour véhicule poids lourd.

(30) Priorité : **29.02.88 FR 8802489**

(43) Date de publication de la demande :
**06.09.89 Bulletin 89/36**

(45) Mention de la délivrance du brevet :
**02.01.92 Bulletin 92/01**

(84) Etats contractants désignés :
**DE ES FR GB IT**

(56) Documents cités :
**FR-A- 831 091**
**FR-A- 2 570 780**
**FR-A- 2 592 113**
**US-A- 1 457 048**
**US-A- 1 493 803**
**US-A- 2 337 069**
**US-A- 2 337 070**

(73) Titulaire : **BENDIX EUROPE Services
Techniques S.A.
126 rue de Stalingrad
F-93700 Drancy (FR)**

(72) Inventeur : **Moirand, Bernard
Bendix France 126 Rue de Stalingrad
F-93700 Drancy (FR)**
Inventeur : **Mahoudeaux, Roger
Bendix France 126 Rue de Stalingrad
F-93700 Drancy (FR)**

(74) Mandataire : **Lejet, Christian
Bendix Europe Service Techniques Service
Brevets 126 rue de Stalingrad
F-93700 Drancy (FR)**

**Description**

L'invention concerne un frein à tambour conçu plus particulièrement, bien que non exclusivement pour être utilisé sur des véhicules poids lourd.

De façon connue, un frein à tambour se compose de deux segments de frein aptes à être appliqués contre un tambour rotatif par un moteur de frein placé entre deux extrémités adjacentes des segments, en prenant appui sur un bloc d'ancrage fixe placé entre les deux autres extrémités adjacentes des segments.

Dans les freins à tambour équipant les véhicules de tourisme, les segments de frein prennent généralement appui directement sur le bloc d'ancrage, la forme des surfaces en contact autorisant à la fois un glissement du segment sur le bloc d'ancrage dans un direction approximativement radiale par rapport à l'axe du tambour et une rotation de l'extrémité du segment par rapport au bloc d'ancrage.

Dans les freins à tambour équipant les véhicules poids lourd, ces deux mouvements relatifs entre les segments et le bloc d'ancrage sont toujours nécessaires. Cependant, la solution classique dans laquelle les segments sont directement en appui sur le bloc d'ancrage est à éviter, compte tenu de l'importance de la pression spécifique engendrée à cet endroit. En effet, l'importance des efforts engendrés lors du freinage sur un véhicule poids lourd est telle que des déformations irréversibles des surfaces en contact se produiraient.

Pour remédier à cet inconvénient, on a proposé dans le document FR-A-2570780 d'interposer des pièces intermédiaires entre les extrémités des segments et le bloc d'ancrage, chaque pièce intermédiaire étant semi-circulaire et coopérant par une surface cylindrique avec l'extrémité du segment correspondant et par une surface plane avec le bloc d'ancrage. Grâce à ces pièces intermédiaires, les mouvements de glissement et de rotation des extrémités des segments par rapport au bloc d'ancrage sont assurés de façon distincte sur des surfaces sensiblement plus grandes que dans la solution classique décrite précédemment. La pression spécifique engendrée lors du freinage est donc répartie sur des surfaces beaucoup plus grandes et les risques de détérioration sont pratiquement supprimés, même dans le cas où le frein équipe un véhicule poids-lourd.

En revanche, il subsiste dans le document FR-A-2570780 un problème lié au fait que le point de pivotement des extrémités des segments qui sont en appui sur le bloc d'ancrage se déplace au fur et à mesure de l'usure des garnitures de friction portées par les segments. Ce déplacement dans le temps du point de pivotement des extrémités des segments n'est pas satisfaisant, car il conduit à faire varier le rendement du frein alors qu'il est généralement souhaité que ce rendement soit aussi constant que possible ; quel que soit l'état d'usure des garnitures.

Une solution à ce dernier problème est proposée dans le document FR-A-2592113, dans lequel les extrémités des segments prennent appui sur le bloc d'ancrage au travers de deux pièces intermédiaires qui se présentent généralement sous la forme de deux broches cylindriques. De façon plus précise, chacune des deux broches est reçue dans un logement cylindrique complémentaire formé dans le bloc d'ancrage et l'extrémité de l'âme du segment correspondant pénètre dans une entaille formée dans la broche, de façon à être en appui glissant dans le fond de cette entaille, qui coïncide avec un diamètre de la broche. Cette solution a pour avantage de fixer une fois pour toutes le point de rotation des extrémités des segments sur le bloc d'ancrage, ce qui permet d'assurer un rendement du frein pratiquement constant.

La solution proposée dans le document FR-A-2592113 n'est cependant pas dépourvue d'inconvénients.

En effet, les broches dans lesquelles sont engagées les extrémités des âmes des segments constituent des pièces d'usure qu'il peut être nécessaire de changer. Cependant, la configuration particulière de ces pièces ainsi que leur agencement rendent ce remplacement très délicat. En particulier, l'enlèvement des broches nécessite de dégager complètement les âmes des segments des entailles dans lesquelles elles sont reçues, ce qui implique un écartement important des segments très difficile à réaliser.

Par ailleurs, les broches étant logées en totalité dans le bloc d'ancrage et les extrémités des segments prenant appui sur des entailles ménagées directement dans ces broches, les dimensions des surfaces en contact entre les segments et les broches sont nécessairement limitées, de sorte que la pression spécifique en cours de freinage, notamment sur un véhicule poids lourd, peut conduire à une détérioration rapide de ces surfaces.

La présente invention a précisément pour objet un frein à tambour dans lequel la coopération entre les extrémités des segments et le bloc d'ancrage s'effectue de telle sorte que la pression spécifique engendrée lors du freinage soit répartie sur des surfaces dont les dimensions ne sont pas limitées, les points de pivotement des extrémités des segments restant inchangés quelle que soit l'usure des garnitures de friction et les pièces d'usure pouvant être remplacées aisément si nécessaire.

Le document FR-A-831091 décrit un frein à tambour dans lequel au moins un des segments est monté par son extrémité de manière qu'elle puisse se déplacer angulairement et également coulisser pour se rapprocher ou s'écarter de la partie en regard du tambour. Il comporte une pièce intermédiaire articulée à un pivot d'ancrage et déterminant une surface sur laquelle le segment peut glisser.

La présente invention s'applique donc à un frein à tambour comportant deux segments de frein aptes à être appliqués contre un tambour rotatif par un moteur de frein placé entre deux premières extrémités adjacentes des segments, en prenant appui sur un bloc d'ancrage fixe placé entre les deuxièmes extrémités adjacentes des segments, par l'intermédiaire d'une première pièce de forme cylindrique et déterminant une surface d'appui cylindrique en contact avec une surface complémentaire du bloc d'ancrage, et une surface d'appui plane en contact avec une surface plane formée à la deuxième extrémité de chaque segment.

Selon l'invention, la surface d'appui plane est formée sur une deuxième pièce comportant une surface cylindrique opposée à la surface d'appui cylindrique et en contact avec la première pièce, la surface d'appui plane étant distante de l'axe de la surface d'appui cylindrique d'une valeur au moins égale au rayon de cette dernière.

Grâce à cet agencement original, les dimensions des surfaces planes par lesquelles les extrémités des segments sont en contact avec les pièces intermédiaires ne sont pas limitées par le diamètre des surfaces d'appui cylindriques. De plus, les pièces intermédiaires peuvent être changées aisément lorsque cela est nécessaire, par un très léger écartement des segments, puisque les surfaces d'appui planes ne sont pas formées dans des entailles réalisées dans ces pièces.

De préférence, chacune des premières pièces est alors reçue dans un logement cylindrique du bloc d'ancrage, ce dernier présentant deux entailles débouchant dans les logements, ouverts sur une face supérieure du bloc et dans lesquelles sont reçues les deuxièmes pièces, une plaque de verrouillage étant fixée sur la face supérieure du bloc d'ancrage par un moyen de fixation démontable, de façon à recouvrir les premières et deuxièmes pièces.

Différentes solutions peuvent être envisagées pour éviter que la deuxième pièce ne puisse s'échapper accidentellement.

Une première solution consiste à former dans la deuxième pièce une surface cylindrique qui encercle plus de la moitié de la première pièce.

Une autre solution consiste à utiliser une deuxième pièce dont la surface cylindrique encercle au plus la moitié de la première pièce et à replier les extrémités de la plaque de verrouillage derrière les surfaces d'appui planes des deuxièmes pièces.

Enfin, une troisième solution, dans laquelle la surface cylindrique de la deuxième pièce encercle également au plus la moitié de la première pièce, consiste à utiliser un ressort en forme de U associé à chacune des deuxièmes pièces de telle sorte qu'une branche intermédiaire de ce ressort prenne appui sur la surface d'appui plane de la deuxième pièce et que les extrémités du ressort prennent appui sur le bloc d'ancrage.

Différents modes de réalisation de l'invention vont maintenant être décrits, à titre d'exemples nullement limitatifs, en se référant aux dessins annexés dans lesquels :

— la figure 1 est une vue de face représentant de façon schématique un frein à tambour conforme à l'invention ;

— la figure 2 est une section à plus grande échelle prise selon la ligne II-II de la figure 1 ;

— la figure 3 est une vue en perspective éclatée représentant le bloc d'ancrage et les différentes pièces qui lui sont adjacentes dans le frein de la figure 1 ;

— la figure 4 est une vue en perspective représentant l'appui de l'un des segments sur le bloc d'ancrage selon un deuxième mode de réalisation de l'invention ; et

— la figure 5 est une vue en perspective éclatée comparable à la figure 3 illustrant un troisième mode de réalisation de l'invention.

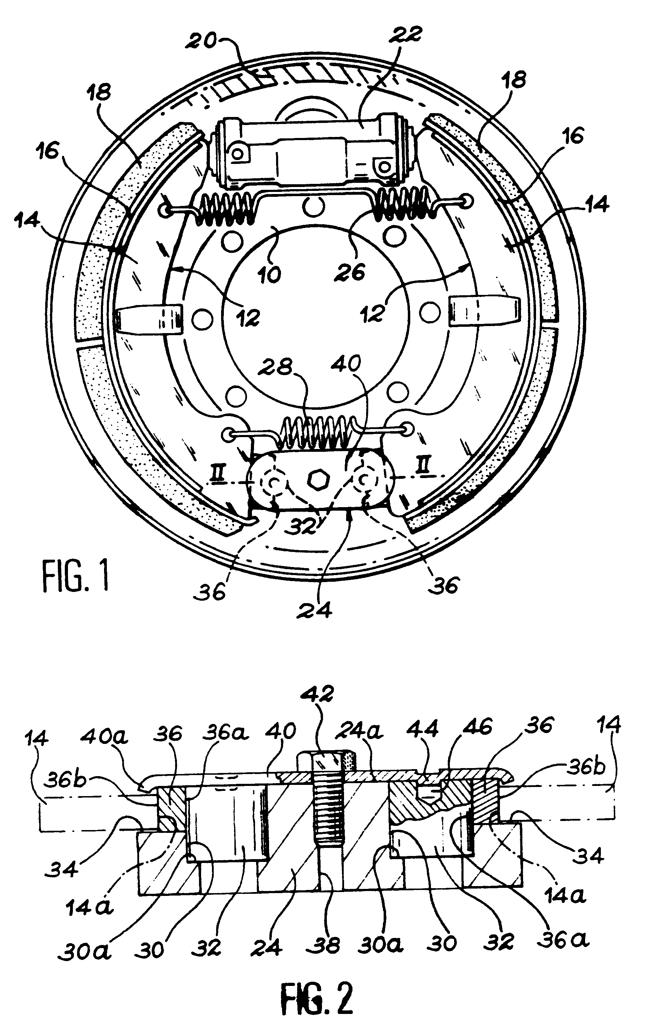

De façon bien connue, le frein à tambour représenté sur la figure 1 comprend une plaque support 10 prévue pour être assujettie à une partie fixe du véhicule, telle qu'une bride d'essieu. Deux segments de frein 12 sont supportés de façon coulissante par la plaque support 10. Chacun de ces segments 12 comprend une âme 14 approximativement plane, sur laquelle est fixée une jante 16 en forme d'arc de cercle, supportant sur sa face extérieure une garniture de friction 18. Les segments 12 sont placés sur la plaque support 10 de telle sorte que les enveloppes extérieures des garnitures 18 soient situées sur un même cercle. Ainsi, les garnitures 18 peuvent venir en contact avec la surface intérieure d'un tambour de frein 20 coiffant les deux segments et représenté en traits mixtes sur la figure 1. Le tambour 20 est fixé à une partie tournante, telle qu'une roue du véhicule.

Un moteur de frein 22 est fixé sur la plaque support 10, entre deux premières extrémités adjacentes des segments 12. La nature du moteur de frein 22 peut être quelconque et dépend principalement du type de véhicule sur lequel le frein est monté. Ainsi, dans le cas d'un véhicule poids lourd auquel s'applique préférentiellement l'invention, ce moteur peut être du type à coin à actionnement pneumatique, alors qu'il s'agit généralement d'un moteur à commande hydraulique pour un véhicule de tourisme. Dans tous les cas, l'actionnement du moteur de frein 22 a pour effet d'exercer une poussée sur l'extrémité adjacente de l'âme 14 de chacun des segments 12.

Un bloc d'ancrage 24, également fixé sur la plaque support 10, est placé entre les deux autres extrémités adjacentes des segments 12, afin que les extrémités correspondantes des âmes 14 de ces segments prennent appui sur ce bloc d'ancrage d'une manière qui sera décrite plus en détail ultérieurement.

Un ressort de traction 26 est interposé entre les extrémités des âmes des segments entre lesquelles est placé le moteur de frein 22, à proximité immédiate de ce dernier, pour rapprocher ces extrémités l'une de l'autre lorsque le moteur de frein n'est pas actionné. De façon comparable, un ressort de traction 28 est interposé entre les extrémités des âmes des segments adjacentes au bloc d'ancrage 24 à proximité immédiate de ce dernier.

Généralement, un frein à tambour tel que celui qui vient d'être décrit est également muni de moyens permettant d'augmenter automatiquement la distance séparant au repos les extrémités des segments adjacentes au moteur de frein 22, au fur et à mesure que les garnitures de friction 18 s'usent. Dans l'exemple de réalisation représenté, ces moyens sont intégrés directement au moteur de frein 22, d'une manière bien connue des spécialistes.

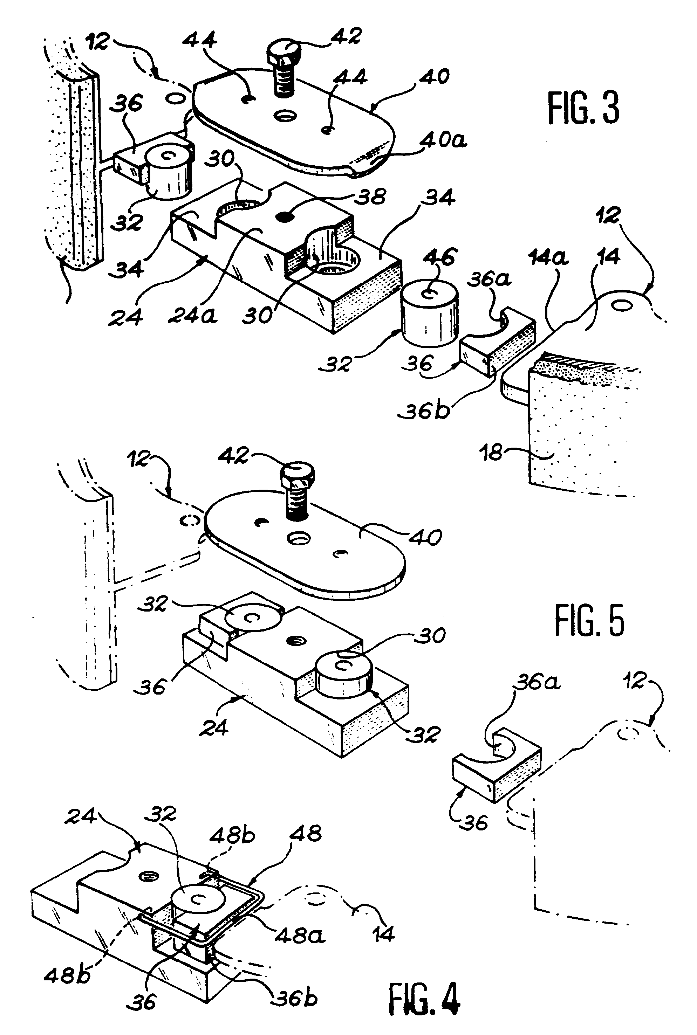

En se reportant aux figures 2 et 3, on décrira maintenant plus en détail les moyens par lesquels les extrémités des âmes 14 des segments prennent appui sur le bloc d'ancrage 24, selon un premier mode de réalisation de l'invention.

Le bloc d'ancrage 24 est un bloc de forme parallélépipédique dans lequel sont formés deux logements cylindriques 30 servant à loger deux pièces intermédiaires cylindriques 32. Les axes des logements 30 sont parallèles à l'axe du tambour 20 et disposés symétriquement par rapport à un plan médian du frein passant par l'axe du tambour et coupant en leur milieu le moteur de frein 22 et le bloc d'ancrage 24. De plus, les diamètres des logements 30 et des pièces 32 sont les mêmes, aux tolérances près, afin que les pièces 32 puissent tourner librement et pratiquement sans jeu dans chacun des logements 30. Enfin, chaque logement 30 débouche sur la face supérieure plane 24a du bloc d'ancrage et est limité en profondeur par un épaulement 30a sur lequel vient en appui la pièce 32 correspondante. Dans ces conditions, la face supérieure de chacune des pièces 32 affleure la face 24a du bloc d'ancrage, comme l'illustre la figure 2.

Deux entailles 34 sont également pratiquées dans le bloc 24, de façon symétrique par rapport au plan médian du frein, chacune de ces entailles débouchant simultanément sur l'extrémité correspondante du bloc d'ancrage, sur sa face supérieure 24a, et dans le logement cylindrique 30 qui lui correspond. L'épaisseur de ces entailles 34 est approximativement égale à la moitié de l'épaisseur du bloc d'ancrage 24.

Une deuxième pièce intermédiaire 36 est logée dans chacune des entailles 34, de façon à être en appui sur la surface extérieure cylindrique de la pièce 32 placée dans le logement 30 correspondant par une surface cylindrique concave 36a complémentaire de cette surface extérieure. Du côté opposé à la surface 36a et tourné vers l'extrémité du bloc d'ancrage 24, chacune des pièces 36 présente une surface d'appui 36b approximativement plane sur laquelle est en appui une surface d'extrémité 14a, également approximativement plane, formée sur l'âme 14 du segment correspondant.

Comme le montre bien la figure 2, la hauteur des pièces 36 est telle que leurs faces supérieures affleurent la face supérieure 24a du bloc d'ancrage 24 lorsque ces pièces sont reçues dans les entailles 34.

Pour maintenir en place les pièces 32 et 36, une plaque de verrouillage 40 est fixée sur la face supérieure plane 24a du bloc d'ancrage 24, par exemple au moyen d'une vis 42 traversant cette plaque et vissée dans un trou taraudé 38 formé au centre du bloc d'ancrage 24. Afin d'immobiliser la plaque 40 en rotation autour de la vis 42, des parties 44, réalisées par exemple par emboutissage de la pièce 40, font saillie vers le bloc 24, dans des trous 46 formés au centre de chacune des pièces cylindriques 32 et débouchant sur la face supérieure de ces pièces.

Grâce à cet agencement, lorsque la plaque 40 est vissée sur le bloc d'ancrage 24, cette plaque est totalement immobilisée alors que chacune des pièces cylindriques 32 peut tourner autour de son axe et que les pièces 36 peuvent glisser sur la surface extérieure des pièces 32.

Ainsi, lorsque le frein est actionné en agissant sur son moteur 22, l'effort de freinage engendré par la venue en contact de friction des garnitures 18 contre le tambour 20 est transmis des segments 12 au bloc d'ancrage 24 au travers des pièces 36 et 32. Plus précisément, cet effort est transmis d'abord aux pièces 36 au travers des surfaces en contact 14a et 36b, puis aux pièces 32 au travers des surfaces 36a et des surfaces extérieures complémentaires des pièces 32, et enfin au bloc d'ancrage 24 par la surface cylindrique des pièces 32 et la surface intérieure des logements 30.

Il est à noter que les dimensions de ces surfaces en contact au travers desquelles les efforts sont transmis des segments au bloc d'ancrage sont relativement importantes et notamment que la longueur des surfaces en contact approximativement planes 36b et 14a est très sensiblement supérieure au diamètre des pièces 32, ce qui permet de répartir la pression spécifique engendrée lors du freinage sur des surfaces suffisamment grandes pour que les déformations induites, même dans le cas d'un véhicule poids lourd, soient aussi réduites que possible.

Dans le mode de réalisation représenté sur les figures 1 à 3, la surface cylindrique 36a de chacune des pièces 36 n'encercle pas la moitié de la pièce 32 correspondante. Par conséquent, les pièces 36 risqueraient de s'échapper latéralement hors des entailles 34 formées dans le bloc d'ancrage 24, au cours du montage ou du démontage du frein, si aucune disposition particulière n'était prévue. Pour supprimer ce risque d'échappement, il est proposé dans ce mode de réalisation de munir la plaque 40 de deux extrémités 40a en saillie vers les âmes 14 des segments derrière les surfaces 36b des pièces 36. De cette manière, tant que la vis 42 n'est pas démontée, les pièces 36 restent solidaires du bloc d'ancrage 24. Les extrémités en saillie 40a peuvent être formées en repliant ces extrémités ou par emboutissage.

Dans l'exemple de réalisation représenté sur la figure 4, la surface cylindrique de chacune des pièces 36 n'encercle pas non plus la moitié de la première pièce 32 qui lui correspond. Cependant, au lieu de munir la plaque de verrouillage (non représentée) de deux extrémités repliées comme dans le mode de réalisation précédent, on empêche dans ce cas l'échappement des pièces 36 en associant à chacune de ces pièces un ressort 48. Ce ressort 48 est constitué par un fil en acier à ressort, ou équivalent, qui présente la forme d'un U dont la branche intermédiaire 48a est en appui sur la surface 36b approximativement plane de la pièce 36 et dont les deux extrémités 48b sont en appui sur le bloc d'ancrage 24. A cet effet, les extrémités 48b du ressort 48 peuvent notamment être repliées pour pénétrer dans des trous formés sur les faces latérales du bloc d'ancrage 24, comme l'illustre la figure 4.

Sur la figure 5, on a représenté un troisième mode de réalisation de l'invention qui se distingue des modes de réalisation précédents par le fait que la surface cylindrique 36a de chacune des pièces 36 encercle plus de la moitié de la première pièce 32 qui lui correspond. Dans ce cas, la plaque de verrouillage 40 n'est pas recourbée aux extrémités et aucun autre moyen n'est prévu pour maintenir en place les pièces 36. En effet, ces dernières restent liées aux pièces cylindriques 32 tant que celles-ci restent en place dans les évidements 30, ce qui est toujours le cas tant que la plaque de verrouillage reste fixée au bloc d'ancrage 24 par la vis 42.

Dans tous les exemples de réalisation qui viennent d'être décrits, les pièces 32 et 36 qui constituent des pièces d'usure du frein peuvent être démontées et remplacées de façon aisée, après enlèvement de la plaque 40. En effet, il suffit alors d'écarter très légèrement les extrémités des segments adjacentes au bloc d'ancrage afin d'annuler l'action du ressort 28, pour dégager les pièces 32 et 36 du bloc d'ancrage 24.

Bien entendu, l'invention n'est par limitée aux mode de réalisation qui viennent d'être décrits à titre d'exemple, mais en couvre toutes les variantes. En particulier, les pièces 32 et 36 peuvent dans certains cas constituer une pièce unique. Cependant, l'utilisation de deux pièces distinctes est préférée, car elle permet une fabrication plus aisée des différentes pièces du frein. Dans tous les cas, la surface d'appui plane 36b qui est en contact avec l'extrémité du segment correspondant, est éloignée de l'axe de la surface d'appui cylindrique qui est en contact avec le bloc d'ancrage d'une distance au moins égale au rayon de cette dernière surface.

## Revendications

1. Frein à tambour comportant deux segments de frein (12) aptes à être appliqués contre un tambour rotatif (20) par un moteur de frein (22) placé entre deux premières extrémités adjacentes des segments, en prenant appui sur un bloc d'ancrage (24) fixe placé entre les deuxièmes extrémités adjacentes des segments, par l'intermédiaire d'une première pièce (32) de forme cylindrique et déterminant une surface d'appui cylindrique en contact avec une surface complémentaire (30) du bloc d'ancrage, et une surface d'appui plane (36b) en contact avec une surface plane (14a) formée à la deuxième extrémité de chaque segment, caractérisé par le fait que la surface d'appui plane (36b) est formée sur une deuxième pièce (36) comportant une surface cylindrique (36a) opposée à la surface d'appui cylindrique et en contact avec la première pièce (32), la surface d'appui plane (36b) étant distante de l'axe de la surface d'appui cylindrique d'une valeur au moins égale au rayon de cette dernière.

2. Frein à tambour selon la revendication 1, caractérisé par le fait que chaque première pièce (32) est reçue dans le logement cylindrique (30) du bloc d'ancrage (24), ce dernier présentant deux entailles (34) débouchant dans les logements, ouvertes sur une face supérieure (24a) du bloc, et dans lesquelles sont reçues les deuxièmes pièces (36), une plaque de verrouillage (40) étant fixée sur la face supérieure du bloc d'ancrage par un moyen de fixation démontable (42), de façon à recouvrir les premières et deuxièmes pièces.

3. Frein à tambour selon la revendication 2, caractérisé par le fait que la surface cylindrique (36a) de la deuxième pièce (36) encercle plus de la moitié de la première pièce (32).

4. Frein à tambour selon la revendication 2, caractérisé par le fait que la surface cylindrique (36a) de la deuxième pièce (36) encercle au plus la moitié de la première pièce (32), la plaque de verrouillage (40) présentant deux extrémités (40a) en saillie derrière les surfaces d'appui planes (36b) des deuxièmes pièces.

5. Frein à tambour selon la revendication 2, caractérisé par le fait que la surface cylindrique (36a) de la deuxième pièce (36) encercle au plus la moitié de la première pièce (32), un ressort (48) en forme de U étant associé à chaque deuxième pièce, de telle sorte qu'une branche intermédiaire (48a) de ce ressort prenne appui sur la surface d'appui plane (36b) de la deuxième pièce, les extrémités (48b) du ressort étant en appui sur le bloc d'ancrage (24).

6. Frein à tambour selon l'une quelconque des revendications 2 à 5, caractérisé par le fait que le moyen de fixation démontable comprend un organe de fixation démontable (42) reliant la plaque (40) au bloc d'ancrage (24), et au moins une partie en saillie (44) de la plaque (40) pénétrant dans un trou (46) formé au centre d'une face adjacente de l'une au moins des premières pièces (32).

7. Frein à tambour selon l'une quelconque des revendications précédentes, caractérisé par le fait que la surface d'appui plane (36b) présente une longueur supérieure au double du rayon de la surface d'appui cylindrique.

**Patentansprüche**

1. Trommelbremse, mit zwei Bremsbacken (12), die dazu geeignet sind, mittels eines zwischen zwei benachbarten ersten Enden der Backen angeordneten Bremsmotors (22) gegen eine drehbare Trommel (20) angelegt zu werden, indem sie sich an einem zwischen den benachbarten zweiten Enden der Backen angeordneten festen Verankerungsblock (24) abstützen, wobei ein erstes Teil (32) von zylindrischer Form, das eine zylindrische Abstützfläche bestimmt, die sich mit einer komplementären Oberfläche (30) des Verankerungsblocks in Kontakt befindet, und eine ebene Abstützfläche (36b), die sich mit einer am zweiten Ende einer jeden Backe ausgebildeten ebenen Oberfläche (14a) in Kontakt befindet, dazwischengesetzt sind, dadurch gekennzeichnet, daß die ebene Abstützfläche (36b) an einem zweiten Teil (36) ausgebildet ist, das eine der zylindrischen Abstützfläche zugewandte zylindrische Oberfläche (36a) umfaßt, die sich mit dem ersten Teil (32) in Kontakt befindet, wobei die ebene Abstützfläche (36b) von der Mittelachse der zylindrischen Abstützfläche um einen Wert entfernt ist, der wenigstens gleich dem Radius diese± letzteren ist.

2. Trommelbremse gemäß Anspruch 1, dadurch gekennzeichnet, daß jedes erste Teil (32) im zylindrischen Aufnahmesitz (30) des Verankerungsblocks (24) aufgenommen wird, wobei dieser letztere zwei Absätze (34) aufweist, die in die Aufnahmesitze münden, die zu einer Oberseite (24a) des Blocks geöffnet sind und die die zweiten Teile (36) aufnehmen, wobei an der Oberseite des Verankerungsblocks mittels eines abnehmbaren Befestigungsmittels (42) eine Halteplatte (40) befestigt ist, derart, daß die ersten und die zweiten Teile abgedeckt werden.

3. Trommelbremse gemäß Anspruch 2, dadurch gekennzeichnet, daß die zylindrische Oberfläche (36a) des zweiten Teils (36) mehr als die Hälfte des ersten Teils (32) umschließt.

4. Trommelbremse gemäß Anspruch 2, dadurch gekennzeichnet, daß die zylindrische Oberfläche (36a) des zweiten Teils (36) höchstens die Hälfte des ersten Teils (32) umfaßt, wobei die Halteplatte (40) zwei Enden (40a) aufweist, die über die ebenen Abstützflächen (36b) der zweiten Teile vorstehen.

5. Trommelbremse gemäß Anspruch 2, dadurch gekennzeichnet, daß die zylindrische Oberfläche (36a) des zweiten Teils (36) höchstens die Hälfte des ersten Teils (32) umfaßt, wobei jedem zweiten Teil eine U-förmige Feder (48) zugeordnet ist, derart, daß sich ein Zwischenabschnitt (48a) dieser Feder auf der ebenen Abstützfläche (36b) des zweiten Teils abstützt, während sich die Enden (48b) der Feder am Verankerungsblock (24) abstützen.

6. Trommelbremse gemäß einem der Ansprüche 2 bis 5, dadurch gekennzeichnet, daß das abnehmbare Befestigungsmittel ein abnehmbares Befestigungselement (42) umfaßt, das die Platte (40) mit dem Verankerungsblock (24) verbindet, wobei wenigstens ein vorstehender Bereich (44) der Platte (40) in ein Loch (46) eindringt, das in der Mitte einer angrenzenden Seite wenigstens eines der ersten Teile (32) ausgebildet ist.

7. Trommelbremse gemäß einem der vorangehenden Ansprüche, dadurch gekennzeichnet, daß die ebene Abstützfläche (36b) eine Länge besitzt, die größer als der doppelte Radius der zylindrischen Abstützfläche ist.

**Claims**

1. Drum brake comprising two brake shoes (12) intended to be laid against a rotary drum (20) by means of a brake motor (22) located between two first adjacent ends of the shoes, bearing on a stationary anchoring block (24) placed between the second adjacent ends of the shoes, by means of a first piece (32) of cylindrical shape and defining a cylindrical bearing surface in contact with a complementary surface (30) of the anchoring block, and a plane bearing surface (36b) in contact with a plane surface (14a) formed at the second end of each shoe, characterized in that the plane bearing surface (36b) is formed on a second piece (36) comprising a cylindrical surface (36a) opposite the cylindrical bearing surface and in contact with the first piece (32), the plane bearing surface (36b) being separated from the axis of the cylindrical bearing surface by a value equal to at least the radius of the latter.

2. Drum brake according to Claim 1, characterized in that each first piece (32) is received in the cylindrical receptacle (30) of the anchoring block (24), the latter having two indentations (34) which open into the receptacles and are open on an upper face (24a) of the block and in which the second pieces (26) are received, a locking plate (40) being fastened to the upper face of the anchoring block by a removable fastening means (42), so as to cover the first and second pieces.

3. Drum brake according to Claim 2, characterized in that the cylindrical surface (36a) of the second piece (36) encircles more than half the first piece (32).

4. Drum brake according to Claim 2, charac-

**EP 0 331 532 B1**

terized in that the cylindrical surface (36a) of the second piece (36) encircles at most half the first piece (32), the locking plate (40) having two projecting ends (40a) behind the plane bearing surfaces (36b) of the second pieces.

5. Drum brake according to Claim 2, characterized in that the cylindrical surface (36a) of the second piece (36) encircles at most half the first piece (32), a U-shaped spring (48) being associated with each second piece in such a way that an intermediate branch (48a) of this spring bears on the plane bearing surface (36b) of the second piece, the ends (48b) of the spring bearing on the anchoring block (24).

6. Drum brake according to any of Claims 2 to 5, characterized in that the removable fastening means comprises a removable fastening member (42), connecting the plate (40) to the anchoring block (24), and at least one projecting part (44) of the plate (40) penetrating into a hole (46) formed at the centre of an adjacent face of at least one of the first pieces (32).

7. Drum brake according to any of the preceding claims, characterized in that the plane bearing surface (36b) has a length greater than double the radius of the cylindrical bearing surface.

FIG. 1

FIG. 2

FIG. 3

FIG. 5

FIG. 4